# EUROPEAN PATENT APPLICATION

(11) **EP 3 035 648 A1**
(43) Date of publication of application: **22.06.2016**
(21) Application number: 15157715.2
(22) Date of filing: 05.03.2015
(51) Int. Cl.: H04L 29/12

(54) **Determining dynamic user attributes using dynamic host configuration protocol**

(30) Priority: 19.12.2014 IN DE38082014
(71) Applicant: ALCATEL LUCENT, 92100 Boulogne-Billancourt (FR)
(72) Inventor: Gupta, Varun, GURGAON 122001 Haryana (IN); Sahu, Lalit Kishore, New Dehli- 110060 Dehli (IN)
(74) Representative: Berthier, Karine

(57) **Abstract**

A central server (102) comprising an analysis module (114) to receive user device and network device attributes from a DHCP server (104), where the user device and network device attributes are indicative of information associated with a user device (106) of a user of an enterprise, information associated with a port through which the user device (106) is seeking access to a communication network (110) of the enterprise, and information associated with a network switch (112) adjacent to the user device (106). The analysis module (114) further is to determine a geographic location and a contact information of the user based on the user device and network device attributes. Further, the analysis module (114) is to transmit the geographic location and the contact information to a communication device (108) in response to a user query received from the communication device (108).

## Description

### FIELD OF INVENTION

The present subject matter relates to determining dynamic user attributes and, particularly, but not exclusively, to determining dynamic user attributes using dynamic host configuration protocol (DHCP).

### BACKGROUND

An enterprise typically comprises a plurality of computing devices, such as laptops, desktops, and servers, distributed throughout the enterprise. For enabling communication amongst the computing devices, generally, an Internet Protocol (IP) based communication network is deployed. In such a communication network, an IP address is assigned to each of the computing devices. Based on the assigned IP addresses, the communication devices identify and communicate with each other. The computing devices seeking to communicate are also referred to as client devices.

Typically, one or more servers present in the communication network are configured for assigning the IP addresses to the client devices. Such servers assign the IP addresses using dynamic host configuration protocol (DHCP). In accordance with the DHCP, unique IP addresses is assigned dynamically from amongst a pool of IP addresses reserved for the communication network.

The dynamic assignment of the IP addresses facilitates the client devices to connect dynamically to the communication network through any access point provided in the enterprise. As a result, users associated with the enterprise may connect to the communication network dynamically. For instance, a user may connect to the communication network using a corresponding laptop from an access point provided in a workstation of the user. In another example, the user may connect to the network from an access point provided in a conference room of the enterprise.

### SUMMARY

This summary is provided to introduce concepts related to determining dynamic user attributes using dynamic host configuration protocol (DHCP). This summary is not intended to identify essential features of the claimed subject matter nor is it intended for use in determining or limiting the scope of the claimed subject matter.

In one implementation, a method comprises modifying, by a network switch, a dynamic host configuration protocol (DHCP)DISCOVER message received from a user device of a first user to generate a modified DHCPDISCOVER message, where the modified DHCPDISCOVER message comprises a switch identifier associated with the network switch and a port identifier indicative of a port through which the user device is linked to an enterprise network of an enterprise. The method further comprises transmitting, by the network switch, the modified DHCPDISCOVER message to a DHCP server present in the enterprise network. Further, user device and network device attributes are ascertained by the DHCP server, based on the modified DHCPDISCOVER message, where the user device and network device attributes comprises a client identifier associated with the user device, a host name associated with the user device, the switch identifier, and the port identifier. The method further comprises transmitting, by the DHCP server, the user device and network device attributes to a central server for determining at least a geographic location and a contact information associated with a user of the user device based on the user device and network device attributes. Further, the geographic location and the contact information associated with the user are determined by the central server based on the user device and network device attributes. The method further comprises transmitting, by the central server, the geographic location and the contact information to a communication device of a second user in response to a user query received from the communication device.

In another implementation, a central server is described. The central comprises a processor and an analysis module coupled to the processor to receive user device and network device attributes from a dynamic host configuration protocol (DHCP) server, where the user device and network device attributes are indicative of information associated with a user device of a user of an enterprise, information associated with a port through which the user device is seeking access to an enterprise network of the enterprise, and information associated with a network switch adjacent to the user device. The analysis module further is to determine at least a geographic location and a contact information associated with the user based on the user device and network device attributes. Further, the analysis module is to transmit the geographic location and the contact information to a communication device in response to a user query received from the communication device.

In another implementation, a DHCP server is described. The DHCP server is to receive a modified DHCPDISCOVER message from a network switch, where the modified DHCPDISCOVER message is based on a DHCPDISCOVER message transmitted by a user device seeking to access an enterprise network of an enterprise, and where the modified DHCPDISCOVER message comprises a switch identifier associated with the network switch and a port identifier indicative of a port through which the user device is seeking access the enterprise network. The DHCP server further is to ascertain user device and network device attributes based on the modified DHCPDISCOVER message, where the user device and network device attributes comprises a client identifier associated with the user device, a host name associated with the user device, the switch identifier, and the port identifier. Further, the DHCP server is to transmit the user device and network device attributes to a central server for determining at least a geographic location and a contact information associated with a user of the user device based on the user device and network device attributes.

In yet another implementation, a network switch is described. The network switch is to modify a dynamic host configuration protocol (DHCP)DISCOVER message received from a user device to generate a modified DHCPDISCOVER message, where the modified DHCPDISCOVER message comprises a switch identifier associated with the network switch and a port identifier indicative of a port through which the user device is linked to an enterprise network of an enterprise. The network switch further is to transmit the modified DHCPDISCOVER message to one or more DHCP servers present in the enterprise network.

In accordance with another implementation of the present subject matter, a computer-readable medium having embodied thereon a computer program for executing a method is described. The method comprises modifying, by a network switch, a dynamic host configuration protocol (DHCP)DISCOVER message received from a user device of a first user to generate a modified DHCPDISCOVER message, where the modified DHCPDISCOVER message comprises a switch identifier associated with the network switch and a port identifier indicative of a port through which the user device is linked to an enterprise network of an enterprise. The method further comprises transmitting, by the network switch, the modified DHCPDISCOVER message to a DHCP server present in the enterprise network. Further, user device and network device attributes are ascertained by the DHCP server, based on the modified DHCPDISCOVER message, where the user device and network device attributes comprises a client identifier associated with the user device, a host name associated with the user device, the switch identifier, and the port identifier. The method further comprises transmitting, by the DHCP server, the user device and network device attributes to a central server for determining at least a geographic location and a contact information associated with a user of the user device based on the user device and network device attributes. Further, the geographic location and the contact information associated with the user are determined by the central server based on the user device and network device attributes. The method further comprises transmitting, by the central server, the geographic location and the contact information to a communication device of a second user in response to a user query received from the communication device.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates an exemplary network environment implementation for determining dynamic user attributes using DHCP, according to an embodiment of the present subject matter;
Figure 2 illustrates components of a central server implemented for determining dynamic user attributes using DHCP, according to an embodiment of the present subject matter;
Figure 3 illustrates an exemplary call flow diagram for determining dynamic user attributes using DHCP, according to an embodiment of the present subject matter; and
Figure 4 illustrates a method for determining dynamic user attributes using DHCP, according to an embodiment of the present subject matter.

### DESCRIPTION OF EMBODIMENTS

An enterprise network may be understood as a combination of different types of networks, such as an Internet Protocol (IP) based communication network and a telephone network. The IP based communication network interconnects a plurality of computing devices, for example, laptops and desktops, present in the enterprise and facilitates communication amongst them. While, the telephone network serves as a platform for facilitating communication amongst a plurality of users associated with the enterprise. In order to perform day to day to operations and exchange information, the users access the enterprise network via computing-based user devices..

Owing to the advancement in technology, the users can nowadays access the enterprise network through one or more access points provided at various locations throughout the enterprise premises. For instance, the users may access the enterprise network through one or more ports provided at work-desks, conference rooms, and meeting rooms using their user devices. Typically, one or more servers are deployed in the enterprise network for the user devices to connect to, within the enterprise network.

For establishing a connection with the enterprise network, a dynamic host configuration protocol (DHCP) based procedure is performed between the user devices and the servers. The DHCP procedure enables the user devices to receive an IP address from amongst a pool of freely available and reusable IP addresses. Such servers which facilitate the user devices to connect to the enterprise network based on the DHCP are referred to as DHCP servers. As a part of the DHCP protocol several messages, such as DHCPDISCOVER message, DHCPOFFER message, DHCPREQUEST message, and DHCPACK messages are exchanged between the user devices and the DHCP servers. Thus, the users can dynamically access the enterprise network through corresponding user devices.

Generally users often attend meetings at meeting rooms located across the enterprise premises and thus, at such instances may not be available at their seat. Further, as the users can access the enterprise network through various locations within the enterprise premises, , certain enterprises may implement a dynamic seating arrangement. In such scenarios, determining dynamic user attributes, such as a current geographic location within the enterprise premises, the nearest located access point such as a fixed line or a mobile number located within the vicinity of the user, and dynamic user information associated with the user may prove to be a cumbersome task. As a result, considerable time and resources may be wasted in order to determine such dynamic user attributes.

The present subject matter describes systems and methods for determining dynamic user attributes based on the DHCP. According to an aspect, dynamic user attributes associated with a user may be determined by a central server deployed in the enterprise network. In said embodiment, user device and network device attributes comprising information associated with the user device and a network device through which the user device is seeking access to the enterprise network is received by the central server. Based on the user device and network device attributes, the central server may determine the dynamic user attributes. Further in a case, the central may also manage dynamic user information associated with the user.

In an implementation, a network switch adjacent to the user device may receive a DHCPDISCOVER message from the user device. Amongst other information, the DHCPDISCOVER message may include information associated with the user device. For instance, the DHCPDISCOVER message may include a client identifier and a host name of the user device. In an example, the DHCPDISCOVER message may include the dynamic user information associated with the user of the user device. The dynamic user information may be understood as information which the user may want to publish to another user seeking to contact the user.

Upon receiving the DHCPDISCOVER message, the network switch may modify the DHCPDISCOVER message to generate a modified DHCPDISCOVER message. The modified DHCPDISCOVER message comprises a switch identifier associated with the network switch and a port identifier associated with a port through which the user device is linked to the enterprise network. Further, a message type of the modified DHCPDISCOVER message is updated to be of a predetermined type. The updation of the message type facilitates a DHCP server in identifying the modified DHCPDISCOVER message. Furthermore, the dynamic user information, may be included in the modified DHCPDISCOVER message. The modified DHCPDISCOVER message may be broadcasted to the DHCP servers present in the enterprise network.

In an implementation, upon receiving the modified DHCPDISCOVER message, a DHCP server, from amongst the DHCP servers, may facilitate the user device to connect to the enterprise network by assigning an IP address and other respective network connection parameters. Upon facilitating the establishment of the connection between the user device and the enterprise network, the DHCP server may analyze the modified DHCPDISCOVER message to ascertain a message type of the modified DHCPDISCOVER message. In a case where the message type of the DHCPDISCOVER message is ascertained to be of a predetermined type, the DHCP server may ascertain user device and network device attributes included in the modified DHCPDISCOVER message. In an example, the user device and network device attributes may include the client identifier, for example, a MAC address, associated with the user device, the host name associated with the user device, the switch identifier, and the port identifier.

In an implementation, the DHCP server may transmit the user device and network device attributes to a central server for facilitating determination of dynamic user attributes associated with the user. In the implementation where the modified DHCPDISCOVER message includes the dynamic user information, the DHCP server may also transmit the dynamic user information to the central server along with the user device and network device attributes.

Upon receiving the user device and network device attributes, the central server may determine the dynamic user attributes, such as a geographic location and a contact information associated with the user. For determining the dynamic user attributes, the central server may access an internal repository or database comprising enterprise network topology information, enterprise telephone network information, and user device information. The enterprise network topology information may be understood as information associated with subnets, routers, switches, ports, and other network devices deployed at locations across the enterprise premises.. For instance, the enterprise network topology information may include a mapping between one or more ports, say, p1 to p10, a switch, say, s1, and a location, say, L1. Such a mapping indicates the location of deployment, i.e., L1, of the switch s1 and the ports p1 to p10 within the enterprise premises. As may be understood, a plurality of such mappings may be included in the enterprise network topology information. The enterprise telephone network information may be understood as information indicative of fixed telephone lines and phone numbers provided at various locations within the enterprise building. The user device information may include a name of all the users and host names of the corresponding user devices allotted to the users. Further, the central sever may also include other information associated with the location. For instance, the central server may include information such as a type of all the locations, an occupancy status of the locations, and an equipment information associated with the location. The equipment information may indicate equipments, such as projectors, types of landlines, type of conference call phones associated with the locations.

As mentioned previously, upon receiving the user device and network device attributes, the central server may determine the dynamic user attributes. For instance, the central server may analyze the user device and network device attributes to identify the host name of the user device. Based on the host name and the user device information, the central server may determine the user of the user device. Subsequently, the central server may ascertain the geographic location of the user based on the switch identifier, the port identifier, and the enterprise network topology information. Upon identifying the geographic location of the user, the central server may then ascertaining the contact information by analyzing the enterprise telephone network information based on the geographic location. The contact information may include telephone numbers of the landline phones present at the geographic location of the user. The central server may store the geographic location and the contact information in the internal repository for future use. In an example where the central server receives the dynamic user information, the central server may also store the dynamic user information in the internal repository for future use. In an example, the geographic location, the contact information, and the dynamic user information may be stored as the dynamic user attributes associated with the user in the central server.

In an example, a second user may seek to obtain information about a first user connected to the enterprise network. In said example, the second user may utilize a communication device, such as an IP phone or a smart phone, and may provide a user name or an identity of the first user to the communication device. The communication device may then transmit a user query to the central server. The user query, in an example, may include the user name or the identity of the first user. On receiving the user query, the central server may retrieve the dynamic user attributes from the central repository and subsequently transmit a user query response comprising the dynamic user attributes to the communciation device.

Upon receiving the user response query, the communication device may ascertain the geographic location and the contact information associated with the first user. Subsequently, the communication device may provide the geographic location and the contact information to the second user. For instance, the communication device may display the geographic location and the contact information of the first user on an enterprise map. In another example, the communication device may display the geographic location and the contact information to the second user through a message. In another example where the dynamic user information is received by the communication device, the communication device may display the dynamic user information to the second user. The second user may subsequently proceed to establish a call with the first user using the communication device.

As will be clear from the foregoing description, determination of the dynamic attributes associated with a user facilitates in locating the user within the enterprise premises. Further, contact with the user may be established based on the dynamic user attributes. Additionally, other dynamic user information associated with the user may be published to other users within the enterprise.

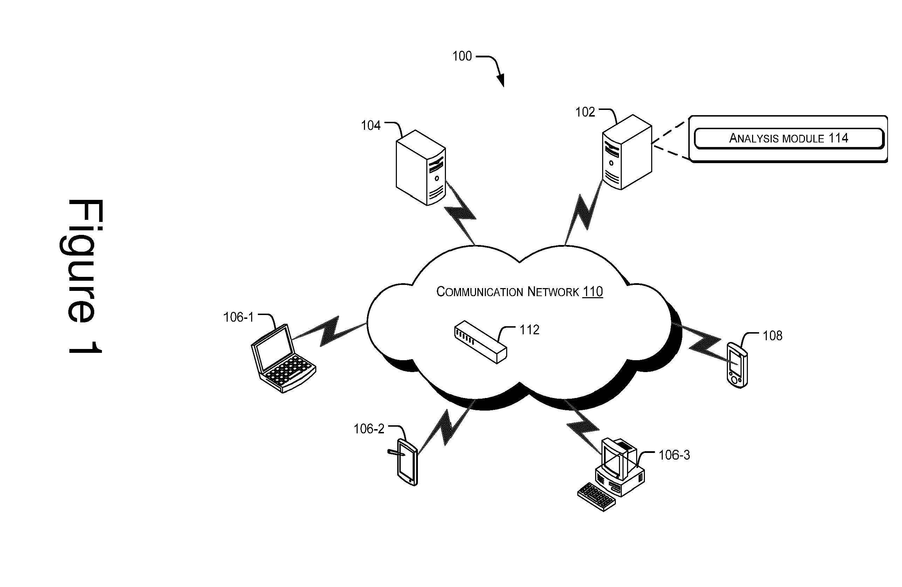

Figure 1 illustrates a network environment 100 for determining dynamic user attributes using DHCP, according to an embodiment of the present subject matter. The network environment 100 includes a central server 102 for determining dynamic user attributes, such as a geographic location and contact information corresponding to users associated with an enterprise. The dynamic user attributes may further include dynamic user information corresponding to each of the users. The dynamic user information may be understood as any information which a user may want to publish to another user seeking to contact the user. For instance, the user may want to indicate a work status indicative of an availability of the user. In such a case, the dynamic user information may include information indicative of the availability of the user. For instance, if the user is in a meeting, the dynamic status information may include a message, say, in a meeting. In another example, the user may seek to publish a brief user profile of the user. In said example, the dynamic user information may include a mini resume of the user. In yet another example, in a case if the user is engaged in a meeting, the user may seek to publish an agenda of the meeting being currently attended by the user.

The network environment 100 further includes a DHCP server 104, a plurality of user devices 106-1, 106-2, ....., 106-N, hereinafter collectively referred to as the user devices 106 and individually referred to as the user device 106, and a plurality of communication devices 108, interconnected with each other through a communication network 110. The communication network 110 may be hereinafter referred to as network 110. For the sake of brevity, only one communication device 108 has been shown in the figure. In an example, the DHCP server 104 may be configured to allocate an IP address to each of the user devices 106 for facilitating the user devices 106 to access the network 110. Examples of the user devices 106, may include but are not limited to, laptop, desktops, workstation computers, smart phones, personal digital assistants (PDAs), and the like. The communication device 108 may be, a Voice over IP (VoIP) phone.

The network 110 may be a wireless network, a wired network, or a combination of wired and wireless network. The network 110 can be a collection of individual networks, interconnected with each other and functioning as a single large network (e.g., internet or an intranet). Examples of such individual networks include, but are not limited to, autonomous systems, internet, Local Area Network (LAN), Wide Area Network (WAN), and the like. In an example, the network 110 may comprise a telephone network, such as a PSTN network, for facilitating the users of the enterprise to contact each other. The network 110 may also be implemented in an enterprise and may be referred to as an enterprise network 110. Amongst other network devices, the network 110 also includes, a switch 112 for facilitating the user devices 106 to connect to the network 110. For the sake of brevity, only one network switch 112 has been shown in the figure. In an example, a switch identifier, such as a switch number, may be associated with the network switch 112. The network switch 112 may receive one or more messages in accordance with the DHCP protocol from the user devices 106 seeking to connect to the network 110 through corresponding ports.

In an implementation, a user of the user device 106-1 may seek to access the network 110. In said implementation, the network switch 112, adjacent to the user device 106-1, may receive a DHCPDISCOVER message from the user device 106-1. Amongst other information, the DHCPDISCOVER message may include a client identifier, for example, a MAC address of the user device 106-1, and a host name of the user device 106-1. Upon receiving the DHCP discover message, the network switch 112 may generate a modified DHCPDISCOVER message by modifying contents of the DHCPDISCOVER message. For instance, the network switch 112 may update a message type of the DHCPDISCOVER message to distinguish the modified DHCPDISCOVER message from the conventional DHCPDISCOVER message. In addition, the network switch 112 may include a switch identifier and a port identifier in the modified DHCPDISCOVER message. The switch identifier may be understood as an identifier, for example, a switch number, associated with the network switch 112. The port identifier may be indicative of a port through which the user device 106-1 is seeking to connect to the network 110. In an example, the DHCPDISCOVER message may also include the dynamic user information associated with the user. The dynamic user information may be provided by the user through an interface (not shown in figure) of the user device 106-1. An example of the modified DHCPDISCOVER message is illustrated below.

### Example modified DHCPDISCOVER message

IP: ID = 0x0; Proto = UDP; Len: 328
   IP: Version = 4 (0x4)
   IP: Header Length = 20 (0x14)
   IP: Service Type = 0 (0x0)
      IP: Precedence = Routine
      IP: ...0.... = Normal Delay
      IP: ....0... = Normal Throughput
      IP: .....0.. = Normal Reliability
   IP: Total Length = 328 (0x148)
   IP: Identification = 0 (0x0)
   IP: Flags Summary = 0 (0x0)
      IP: .......0 = Last fragment in datagram
      IP: ......0. = May fragment datagram if necessary
      IP: Fragment Offset = 0 (0x0) bytes
      IP: Time to Live = 128 (0x80)
      IP: Protocol = UDP - User Datagram
      IP: Checksum = 0x39A6
      IP: Source Address = 0.0.0.0
      IP: Destination Address = 255.255.255.255
      IP: Data: Number of data bytes remaining = 308 (0x0134)
DHCP: Discover (xid=21274A1D)
**DHCP: Op Code (op) = 3 (0x3)**
DHCP: Hardware Type (htype) = 1 (0x1) 10Mb Ethernet
DHCP: Hardware Address Length (hlen) = 6 (0x6)
DHCP: Hops (hops) = 0 (0x0)
DHCP: Transaction ID (xid) = 556223005 (0x21274A1D)
DHCP: Seconds (secs) = 0 (0x0)
DHCP: Flags (flags) =0 (0x0)
   DHCP: 0............... = No Broadcast
DHCP: Client IP Address (ciaddr) = 0.0.0.0
DHCP: Your IP Address (yiaddr) = 0.0.0.0
DHCP: Server IP Address (siaddr) = 0.0.0.0
DHCP: Relay IP Address (giaddr) = 0.0.0.0
DHCP: Client Ethernet Address (chaddr) = 08002B2ED85E
DHCP: Server Host Name (sname) = <Blank>
DHCP: Boot File Name (file) = <Blank>
DHCP: Magic Cookie = [OK]
DHCP: Option Field (options)
   DHCP: DHCP Message Type = DHCP Discover
   **DHCP: Client-identifier = (Type: 1) 08 00 2b 2e d8 5e**
   **DHCP: Host Name = JUMBO-WS**
   DHCP: Parameter Request List = (Length: 7) 01 0f 03 2c 2e 2f
   **DHCP: Switch Identifier = "S122342"**
   **DHCP: Port Identifier = "P9"**
   DHCP: End of this option field

As illustrated in the example modified DHCPDISCOVER message, the network switch 112 has updated the message type to '3 (0x3)'. Further, the network switch has included the Switch Identifier = "S122342" and Port Identifier = "P9" in the modified DHCPDISCOVER message.

In an example, the network switch 112 may transmit the modified DHCPDISCOVER message to a plurality of DHCP servers present in the network 110. As may be understood, the modified DHCPDISCOVER message may be forwarded via one or more network switches to the DHCP server 104. However, in such a case, the contents of the modified DHCPDISCOVER message may not be modified. For the sake of brevity, only the DHCP server 104 has been shown in the figure. In said example, each of the DHCP servers, upon receiving the modified DHCPDISCOVER message may transmit a DHCPOFFER message to the user device 106-1. The DHCPOFFER message may include an IP address and network configuration parameters being offered by the DHCP server to the user device 106-1 for connecting to the network 110. The user device 106-1 may then accept a DHCPOFFER message from amongst the plurality of DHCPOFFER messages received by the user device 106-1. In an example, say the user device 106-1 may accept the DHCPOFFER message sent by the DHCP server 104. The user device 106-1 may then transmit a DHCPREQUEST message to the DHCP server 104 for accepting the IP address and the network configuration parameters offered by the DHCP server 104. Upon receiving the DHCPREQUEST message, the DHCP server 104 may transmit a DHCPACK message to the user device 106-1. The DHCPREQUEST message includes the network configuration parameters, the IP address, and a lease duration.

Upon completion of the exchange of the aforementioned messages between the DHCP server 104 and the user device 106-1, the DHCP server 104 may analyze the modified DHCPDISCOVER message, received from the user device 106-1, to identify a message type of the modified DHCPDISCOVER message. In a case where the DHCP server 104 identifies the message type of the DHCPDISCOVER message to be of a predetermined type, the DHCP server 104 may ascertain one or more user device and network device attributes based on the modified DHCPDISCOVER message. For instance, the DHCP server 104 may analyze the modified DHCPDISCOVER message for ascertaining the client identifier, the host name, the switch identifier, and the port identifier included in the modified DHCPDISCOVER message. The DHCP server 104 may then transmit the user device and network device attributes to the central server 102 for determining dynamic user attributes associated with the user. For instance, the DHCP server 104 may transmit a user info update request comprising the user device and network device attributes to the central server 104 for facilitating determination of the dynamic user attributes associated with the user.

In another implementation where the modified DHCPDISCOVER message comprises the dynamic user information, the DHCP server 104 may transmit the dynamic user information along with the user device and network device attributes to the central server 102 for determining the dynamic user attributes.

In an implementation, upon receiving the user device and network device attributes, an analysis module 114 of the central server 102 may determine the dynamic user attributes associated with the user. For example, based on the user device and network device attributes, the analysis module 114 may determine the geographic location and the contact information associated with the user. Further, in another case where the central server 102 receives the dynamic user information, the analysis module 114 may include the dynamic user information in the dynamic user attributes. In an example, the analysis module 114 may store the dynamic user attributes in an internal repository (not shown in the figure). In said example, the analysis module 114 may further map the dynamic user attributes to a user account or profile of the user for future user.

In an implementation, the analysis module 114 may receive a user query from the communication device 108. For instance, another user, say a second user seeking to track the user of the user device 106-1, may send the user query through the communication device 108. In an example, the user query may include a client id, for example, a name of the user. Upon receiving the user query, the analysis module 114 may transmit the dynamic user attributes to the communication device 108.

Upon receiving the dynamic user attributes, in an example, the communication device 108 may or may not establish a call to the user of the user device 106-1 based on the dynamic user attributes.

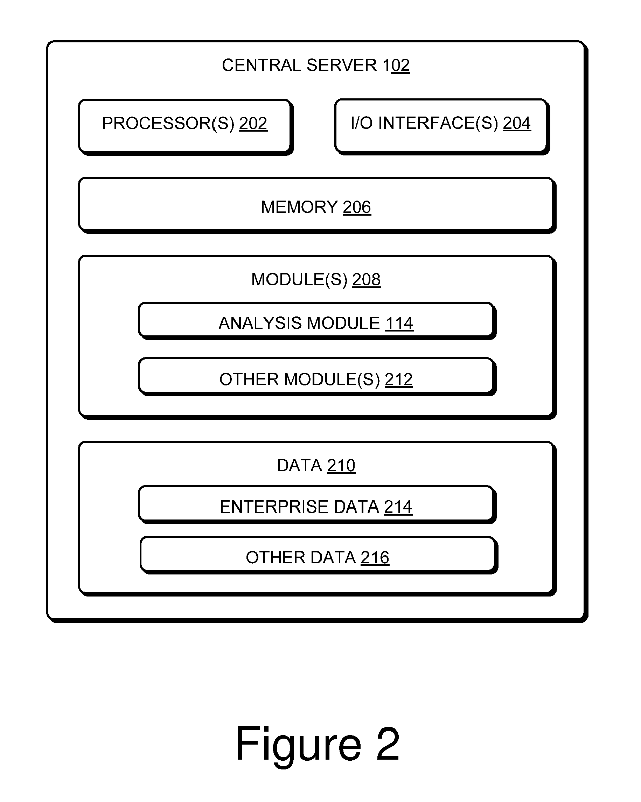

Figure 2 illustrates the central server 102, in accordance with an embodiment of the present subject matter. In an implementation, the central server 102 may include one or more processor(s) 202, I/O interfaces 204, and a memory 206 coupled to the processor 202. The processor 202 can be a single processing unit or a number of units, all of which could include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 206.

The I/O interfaces 204 may include a variety of software and hardware interfaces, for example, interfaces for peripheral device(s), such as a keyboard, a mouse, a display unit, an external memory, and a printer. Further, the I/O interfaces 204 may enable the central server 102 to communicate with other devices, such as a tag reader (not shown in the figure), other computing devices, and other external databases (not shown). The I/O interfaces 204 can facilitate multiple communications within a wide variety of networks and protocol types, including wired networks, for example, local area network (LAN), cable, etc., and wireless networks, such as Wireless LAN (WLAN), cellular network, or satellite. For the purpose, the I/O interfaces 204 include one or more ports for connecting a number of computing systems with one another or to a network.

The memory 206 may include any non-transitory computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In one implementation, the central server 102 also includes module(s) 208 and data 210.

The module(s) 208, amongst other things, include routines, programs, objects, components, data structures, etc., which perform particular tasks or implement data types. The module(s) 208 may also be implemented as, signal processor(s), state machine(s), logic circuitries, and/or any other devices or components that manipulate signals based on operational instructions. Further, the module(s) 208 can be implemented in hardware, instructions executed by a processing unit, or by a combination thereof. The processing unit can comprise a computer, a processor, such as the processor 202, a state machine, a logic array, or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the module(s) 208 may be machine-readable instructions (software) which, when executed by a processor/processing unit, perform any of the described functionalities. The machine-readable instructions may be stored on an electronic memory device, hard disk, optical disk, or other machine-readable storage medium or non-transitory medium. In one implementation, the machine-readable instructions can be also be downloaded to the storage medium via a network connection.

In one implementation, the module(s) 208 further include an analysis module 114 and other module(s) 212. The other modules 212 may include programs or coded instructions that supplement applications and functions of the central server 102.

The data 210 serves, amongst other things, as a repository for storing data processed, received, and generated by one or more of the module(s) 208. The data 210 includes enterprise data 214 and other data 216. The other data 216 includes data generated as a result of the execution of one or more modules in the module(s) 208.

In operation, the analysis module 114 may receive the user device and network device attributes from the DHCP server 104. In an example, the user device and network device attributes may include the client identifier and the host name associated with a user device, such as the user device 106-1. Further, the user device and network device attributes may also include the switch identifier and the port identifier. The analysis module 114 may analyze the user device and network device attributes for determining the geographic location and the contact information associated with the user. For instance, the analysis module 114 may use the host name and allocated user device information for identifying a user of the user device. The user device information may include a list of users and corresponding user devices allocated to the users. Thereafter, the analysis module 114 may determine the geographic location of the user based on the switch identifier, the port identifier, and enterprise network topology information. The enterprise network topology information may be understood as information indicative of deployment of various switches, ports, routers, hubs, gateways, subnets, and the like, within the enterprise. Upon identifying the geographic location, the analysis module 114 may determine the contact information based on the geographic location and telephone network information. The telephone network information may be understood as information pertaining to deployment of telephone fixed lines installed at several geographical locations within the enterprise building. Subsequently, the analysis module 114 may store the geographic location and the contact information of the user in an internal repository (not shown in the figure). In an example, the analysis module 114 may associate the geographic location and the contact information of the user with a user account of the user for future use.

In an implementation, the analysis module 114 may receive dynamic user information associated with the user of the user device. The dynamic user information may be understood as any information which the user may seek to publish. In said implementation, the analysis module 114 may store the dynamic user information associated with the user in the internal repository for future user.

In an example, the analysis module 114 may receive a user query from another user seeking to obtain information about the user. The user query may include a user name or a corporate id of the user. The analysis module 114 may then obtain the geographical location, the contact information, and, if applicable, the dynamic user information, associated with the user from the internal repository. Subsequently, the analysis module 114 may transmit the aforementioned user attributes to the other user's communication device.

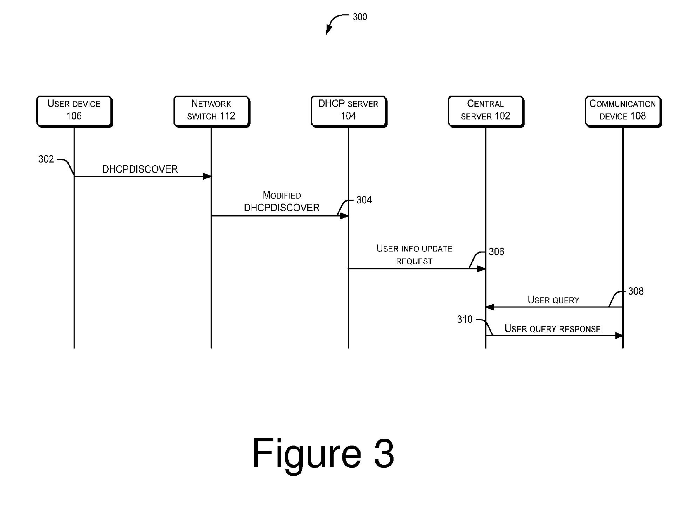

Figure 3 illustrates an exemplary call flow diagram 300 for determining dynamic user attributes associated with a user of an enterprise, according to an embodiment of the present subject matter. The various arrow indicators used in the call-flow diagram 300 depict the transfer of data between the user device 106, the network switch 112, the DHCP server 104, the central server 102, and the communication device 108. It will be understood that the aspects of the present subject matter for determining dynamic user attributes associated with a user of an enterprise may be suitably implemented in communication networks, such as CDMA, WCDMA, and GSM network, albeit with few alterations.

In an example, a first user seeking access to network 110 may use the user device 106 for connecting to the network 110. In said example, the user device 106 may transmit a DHCPDISCOVER message 302 to the network switch 112. In an example, the DHCPDISCOVER message 302 may include one or more user device attributes, such a client identifier and a host name, associated with the user device 106. In another example, the DHCPDISCOVER message may also include dynamic user information associated with the first user.

The network switch 112 may generate a modified DHCPDISCOVER message 304 based on the DHCPDISCOVER message 302. In an example, the modified DHCPDISCOVER message 304 may include a switch identifier associated with the network switch and a port identifier associated with a port through which the user device 106 is seeking access. The network switch 112 may then transmit the modified DHCPDISCOVER message 304 to a plurality of DHCP servers. For the sake of brevity, the DHCP procedure has been described with reference to the user device 106 and the DHCP server 104. Further, intermittent conventional messages, although described below, have not been shown in the figure.

In an example, the DHCP server 104 may receive the modified DHCPDISCOVER message from the user device. The DHCP server 104 may then offer an IP address and other network configuration parameters to the user device 106. In a case where the user device 106 accepts the IP address and the network configuration parameters, the DHCP server 104 transmits an acknowledgement to the user device 106.

Once the DHCP procedure between the DHCP server 104 and the user device 106 is complete, the DHCP server 104 may ascertain the user device and network device attributes based on the modified DHCPDISCOVER message 304. In an example, the DHCP server 104 may transmit a user info update request 306 to the central server 102 for determining dynamic user attributes such as a geographic location and a contact information associated with the user. In an example, the user info update request 306 may include the user device and network device attributes. In another example, the user info update request 306 may also include the dynamic user information associated with the user. An example user info update request has been illustrated below.

### Example user info update request

DHCP: user info update request (xid=21274A1D)
   DHCP: Op Code (op) = 3 (0x3)
   DHCP: Hardware Type (htype) = 1 (0x1) 10Mb Ethernet
   DHCP: Hardware Address Length (hlen) = 6 (0x6)
   DHCP: Hops (hops) = 0 (0x0)
   DHCP: Transaction ID (xid) = 556223005 (0x21274A1D)
   DHCP: Option Field (options)
      DHCP: DHCP Message Type = user info update request
      DHCP: Client-identifier = (Type: 1) 08 00 2b 2e d8 5e
      DHCP: Host Name = JUMBO-WS
      DHCP: Switch Identifier = "S122342"
      DHCP: Port Identifier = "P9"
DHCP: End of this option field

As illustrated above, the user info update request includes a client identifier '08 00 2b 2e d8 5e' associated with a user device, a host name 'JUMBO-WS' associated with the client device, a switch identifier 'S122342' associated with a network switch adjacent to the user device, and a port identifier 'P9' indicative of a port through which the user device is seeking access to the enterprise network. Further, a message type of the user info update request is 3 (0x3).

Upon receiving the user info update request 306, the central server may determine the dynamic user attributes, such as a geographic location and a contact information associated with the first user. Additionally, in a case where the user info update request includes the dynamic user information, the central server 102 may also include the dynamic user information in the dynamic user attributes. The central server 102 may then store the dynamic user attributes for future use.

In an example, the central server 102 may receive a user query 308 from, say, a second user through the communication device 108 for obtaining information about the first user. For instance, a user JOHN seeking to obtain information about a user SAM may send the user query 308 to the central server 102 through a SIP phone. An example illustrating the user query 308 has been illustrated below.

### EXAMPLE USER QUERY

GET_USER_INFO sip:SAM@salzburg.at;user=phone SIP/2.0
Max-Forwards:70
To: <sip:CLS @ salzburg.at;user=phone>
From: John sip:john.doppler@salzbur.g.edu.at ;tag=817234
Call-ID: 12-45-A5-46-F5@salzburg.edu.at
CSeq: 1 GET_USER_INFO
Subject: Get user information
Contact: sip:john.doppler@salzburg.edu.at
Content-Type: application/sdp
Content-Length: 151
v=Current Location , Nearest Calling Access

As illustrated above, the "TO" Header shall contain an SIP Address of the central server 102, the "FROM" Header shall contain an SIP Address of JOHN, Request URI shall contain the "USERNAME" of the SAM, and the content shall indicate the information requested. For instance, in the above example user query, a current location and nearest calling access of SAM is requested.

In response to the user query 308, the central server 102 may transmit the dynamic user attributes to the communication device 108 via a user query response 310. An example user query response 310 has been illustrated below.

### EXAMPLE USER QUERY RESPONSE

USER_INFO_RESPONSE sip:SAM@salzburg.at;user=phone SIP/2.0
Max-Forwards:70
To: <sip:CLS @ salzburg.at;user=phone>
From: John sip:john.doppler@salzbur.g.edu.at ;tag=817234
Call-ID: 12-45-A5-46-F5@salzburg.edu.at
CSeq: 1 USER_INFO_RESPONSE
Subject: User Information Response
Contact: sip:john.doppler@salzburg.edu.at
Content-Type: application/sdp
Content-Length: 151
Current Location= FT1 Conference Room, Second Floor
Reachable at = 0124-21343232,216575642

As illustrated above, the "TO" Header shall contain an SIP Address of the central server 102, the "FROM" Header shall contain an SIP Address of JOHN, the Request URI shall contain the "USERNAME" of the SAM, and the content shall contain the information requested. For instance, in the above example user response query, the content contains FT1 Conference Room, Second Floor, i.e., the location of SAM, and 0124-21343232,216575642, the contact information of SAM.

In an example, the user query response 310 may be a map indicating the geographic location of the user within the enterprise premises. Upon receiving the user query response 310, the communication device 108 may seek to establish a call to the user of the user device 106. In another example, the user query response may be a message comprising the dynamic user attributes. In yet another example, a combination of the map and the message may be provided to the communication device 108.

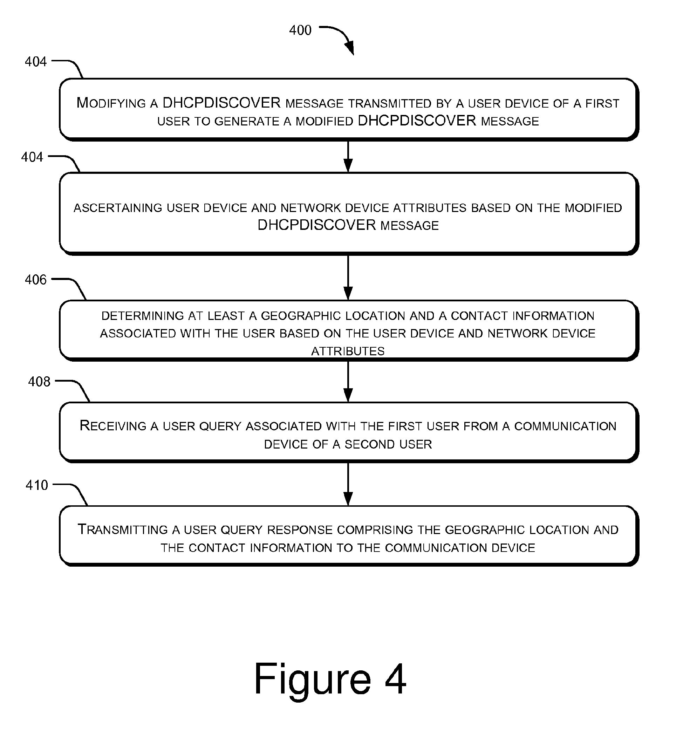

Figure 4 illustrates a method 400 for determining dynamic user attributes using DHCP, in accordance with an embodiment of the present subject matter. The order in which the method 400 is described is not intended to be construed as a limitation, and any number of the described method blocks can be combined in any order to implement the method 400, or an alternative method. Additionally, individual blocks may be deleted from the method without departing from the spirit and scope of the subject matter described herein. Furthermore, the method can be implemented in any suitable hardware, software, firmware, or combination thereof.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover all the communication networks and communication devices configured to perform said steps of the exemplary method.

At block 402, a DHCPDISCOVER message transmitted by a user device of a first user is modified to generate a modified DHCPDISCOVER message. In an example, a network switch adjacent to a user device seeking access to an enterprise network of an enterprise may generate the modified DHCPDISCOVER message. The modified DHCPDISCOVER message may include a switch identifier associated with the network switch and a port identifier indicative of a port through which the user device is seeking access to the enterprise network. Further, the network switch may update a message type of the modified DHCPDISCOVER message to distinguish the modified DHCPDISCOVER message from the DHCPDISCOVER message. In an example, the modified DHCPDISCOVER message may also include dynamic user information associated with a user of the user device. The network switch may then transmit the modified DHCPDISCOVER message to a DHCP server from amongst a plurality of DHCP server. In an example, the network switch 112 may generate the modified DHCPDISCOVER message. The network switch 112 may then transmit the modified DHCPDISCOVER message to the DHCP server 104.

At block 404, user device and network device attributes are ascertained based on the modified DHCPDISCOVER message. In an example, the DHCP server 104 may receive the modified DHCPDISCOVER message and may subsequently facilitate the user device 106 in a manner as described earlier with reference to Figure 1. Upon completion of the DHCP procedure between the DHCP server 104 and the user device 106, the DHCP server 106 then ascertains the user device and network device attributes. In an example, the user device and network device attribute may include a client identifier associated with the user device, a host name associated with the user device, the switch identifier, and the port identifier. In an example, the DHCP server 104 may ascertain the user device and network device attributes. The user device and network device attributes may be transmitted to a central server.

At block 406, at least a geographic location and a contact information associated with the user may be determined based on the user device and network device attributes. In an example, the geographic location indicates a location of the user within the enterprise premises and the contact information indicates fixed telephone number(s) on which the user can be reached. In an example, the central server 102 may determine the geographic location and the contact information.

At block 408, a user query associated with the first user is received from a communication device of a second user. In an example, the second user, seeking information about the first user may transmit the user query. The user query may include a user name or an identity of the first user.

At block 410, a user query response comprising the geographic location and the contact information is transmitted to the communication device. In an example, the central server 104 may transmit the user query response. In an example, the dynamic user information associated with the user may also be transmitted to the communication device. The communication device may then establish a call with the first user of the user device.

Although implementations for determining dynamic user attributes using DHCP have been described in a language specific to structural features and/or methods, it is to be understood that the appended claims are not necessarily limited to the specific features or methods described. Rather, the specific features and methods are disclosed as exemplary implementations for determining dynamic user attributes using DHCP.

## Claims

1. A method comprising:
receiving a dynamic host configuration protocol (DHCP)DISCOVER message from a user device (106) of a first user, wherein the user device (106) is linked to a communication network (110) of an enterprise through a port;
modifying the DHCPDISCOVER message to generate a modified DHCPDISCOVER message, wherein the modified DHCPDISCOVER message comprises a switch identifier associated with a network switch (112) adjacent to the user device (106), and a port identifier indicative of the port;
transmitting the modified DHCPDISCOVER message to a DHCP server (104) present in the communication network (110);
ascertaining user device and network device attributes based on the modified DHCPDISCOVER message, wherein the user device and network device attributes comprise a client identifier associated with the user device (106), a host name associated with the user device (106), the switch identifier, and the port identifier;
determining a geographic location and contact information associated with a user of the user device (106) based on the user device and network device attributes; and
transmitting the geographic location and the contact information to a communication device (108) of a second user in response to a user query received from the communication device (108).

2. The method as claimed in claim 1, wherein the DHCPDISCOVER message further comprises dynamic user information associated with the user.

3. The method as claimed in claim 2, wherein the method further comprises:
obtaining the dynamic user information associated with the user; and
transmitting the dynamic user information to the communication device (108).

4. A central server (102) comprising:
a processor (202); and
an analysis module (114) coupled to the processor (202) to,
receive user device and network device attributes from a dynamic host configuration protocol (DHCP) server, wherein the user device and network device attributes are indicative of:
information associated with a user device (106) of a user of an enterprise,
information associated with a port through which the user device (106) is seeking access to a communication network (110) of the enterprise,
and information associated with a network switch (112) adjacent to the user device (106);
determine a geographic location and a contact information of the user based on the user device and network device attributes; and
transmit the geographic location and the contact information to a communication device (108) in response to a user query received from the communication device (108).

5. The central server (102) as claimed in claim 4, wherein the analysis module (114) further is to,
receive dynamic user information associated with the user from the DHCP server (104); and
transmit the dynamic user information to the communication device (108).

6. The central server (102) as claimed in claim 4, wherein the analysis module (114) further is to,
determine, from an internal repository, a name of the user based on the user device and network device attributes and user device information;
determine the geographic location associated with the user based on the user device and network device attributes and enterprise network topology information; and
determine the contact information associated with the user based on the location and enterprise telephone network information.

7. The central server (102) as claimed in claim 4, wherein the user device and network device attributes comprises a client identifier associated with the user device (106), a host name associated with the user device (106), a switch identifier associated with the network switch (112) and a port identifier indicative of a port through which the user device (106) is seeking access the communication network (110).

8. A DHCP server (104) to,
receive a modified DHCPDISCOVER message from a network switch (112), wherein the modified DHCPDISCOVER message is based on a DHCPDISCOVER message transmitted by a user device (106) seeking to access a communication network (110) of an enterprise, and wherein the modified DHCPDISCOVER message comprises a switch identifier associated with the network switch (112) and a port identifier indicative of a port through which the user device (106) is seeking access the communication network (110);
ascertain user device and network device attributes based on the modified DHCPDISCOVER message, wherein the user device and network device attributes comprises a client identifier associated with the user device (106), a host name associated with the user device (106), the switch identifier, and the port identifier; and
transmit the user device and network device attributes to a central server (102) for determining a geographic location and a contact information associated with a user of the user device (106) based on the user device and network device attributes.

9. The DHCP server (104) as claimed in claim 8, wherein the DHCP server (104) further is to,
analyze the modified DHCPDISCOVER message to identify a message type of the modified DHCPDISCOVER message; and
upon identifying the message type to be of a predetermined type, ascertain the user device and network device attributes.

10. The DHCP server (104) as claimed in claim 8, wherein the DHCPDISCOVER message comprises dynamic user information associated with the user, and wherein the DHCPDISCOVER message is generated by the user device (106).

11. The DHCP server (104) as claimed in claim 9, wherein the DHCP server (104) further is to,
receive the dynamic user information associated with the user from the network switch (112); and
transmit the dynamic user information to the central server (102).

12. A network switch (112) to,
modify a dynamic host configuration protocol (DHCP)DISCOVER message received from a user device (106) to generate a modified DHCPDISCOVER message, wherein the modified DHCPDISCOVER message comprises a switch identifier associated with the network switch (112) and a port identifier indicative of a port through which the user device (106) is linked to a communication network (110) of an enterprise; and
transmit the modified DHCPDISCOVER message to one or more DHCP servers present in the communication network (110).

13. The network switch (112) as claimed in claim 12, wherein the network switch (112) further is to update a message type of the DHCPDISCOVER message.

14. The network switch (112) as claimed in claim 12, wherein the DHCPDISCOVER message further comprises dynamic user information associated with the user.

15. A non-transitory computer-readable medium having embodied thereon a computer program for executing a method comprising:
receiving a dynamic host configuration protocol (DHCP)DISCOVER message from a user device (106) of a first user, wherein the user device (106) is linked to a communication network (110) of an enterprise through a port;
modifying the DHCPDISCOVER message to generate a modified DHCPDISCOVER message, wherein the modified DHCPDISCOVER message comprises a switch identifier associated with a network switch (112) adjacent to the user device (106), and a port identifier indicative of the port;
transmitting the modified DHCPDISCOVER message to a DHCP server (104) present in the communication network (110);
ascertaining user device and network device attributes based on the modified DHCPDISCOVER message, wherein the user device and network device attributes comprises a client identifier associated with the user device (106), a host name associated with the user device (106), the switch identifier, and the port identifier; and
determining a geographic location and contact information associated with a user of the user device (106) based on the user device and network device attributes; and
transmitting the geographic location and the contact information to a communication device (108) of a second user in response to a user query received from the communication device (108).
